# EUROPEAN PATENT APPLICATION

(11) **EP 2 608 142 A1**
(43) Date of publication of application: **26.06.2013**
(21) Application number: 12186250.2
(22) Date of filing: 27.09.2012
(51) Int. Cl.: G06Q 30/00, G06Q 10/10, G06F 3/048

(54) **System and method for managing avatars**

(30) Priority: 21.12.2011 US 201113333965
(71) Applicant: Avaya Inc., Basking Ridge, NJ 07920 (US)
(72) Inventor: Fagundes, Luciano Godoy, 04719-002 Sao Paulo (BR); Moran, Tommy, Galway (IE); Yamanappa, Veeranna Angadageri, 560057 Bangalore (IN); Khan, Mohammad Raza, 411048 Pune Maharashtra (IN); Desai, Dhaval Tusharbhai, 360004 Gujrat (IN); Kohler, Joylee, Northglenn, CO 80234 (US)
(74) Representative: Williams, David John

(57) **Abstract**

A system and method for managing an avatar is provided. The method comprises receiving an initial input from one or more communication interfaces, processing the initial input using one or more processors, determining one or more initial characteristics based on processing the initial input and providing instructions to generate and display the avatar with one or more initial avatar characteristics in response to the one or more initial characteristics.

## Description

### BACKGROUND

Embodiments of the disclosure relate generally to telecommunication systems and more specifically to a system and method for managing avatars.

Many applications require a customer to interact with automated self-service systems to process general queries. Usually, such automated systems include a preprogrammed series of recorded prompts. However, such automated systems do not provide the kind of personalized responsiveness that human supervisors can most naturally offer. More importantly, such automated self-service applications are not often able to cultivate a personal relationship with the customer.

However, supervisors are expensive to install and maintain and are subject to human limitations (i.e., embodied in a particular site of memory, cognition, and sensibilities). A company's attempt to more equally distribute the call load among its supervisors would likely result in customers' repeating personal information with each new supervisor. In addition, current avatar systems use a single avatar and in most instances, a single script for all customers. As a consequence, there is no personalized service or adaptation of the avatar while communicating with a customer. Therefore, the current avatar systems are not entirely capable of building and maintaining a personal relationship with a customer.

Therefore, there is a need for automated service systems that are cost effective, personalized and are capable of building a relationship with the customer.

### BRIEF DESCRIPTION

Briefly, according to one embodiment of the present disclosure, a method for managing an avatar is provided. The method comprises receiving an initial input from one or more communication interfaces, processing the initial input using one or more processors, determining one or more initial characteristics based on processing the initial input and providing instructions to generate and display the avatar with one or more initial avatar characteristics in response to the one or more initial characteristics.

In another embodiment, a device managing an avatar is provided. The device comprising one or more processors; one or more communication interfaces capable of being coupled to a communication network and the communication interfaces coupled to the one or more processors; an avatar generation engine executed by the one or more processors, the avatar engine: (i) receives an initial input from the one or more communication interfaces; (ii) processes the initial input using one or more processors; (iii) determines one or more initial characteristics based on processing the initial input; and (iv) provides instructions to generate and display the avatar with one or more initial avatar characteristics in response to the one or more initial characteristics.

In another embodiment, a system managing an avatar is provided. The system comprises a customer service device having one or more processors, one or more communication interfaces capable of being coupled to a communication network and the communication interfaces coupled to the one or more processors, an avatar generation engine executed by the one or more processors, the avatar generation engine: (i) receives an initial input from the one or more communication interfaces; (ii) processes the initial input using one or more processors; (iii) determines one or more initial characteristics based on processing the initial input; and (iv) provides instructions to generate and display the avatar with one or more initial avatar characteristics in response to the one or more initial characteristics. The system further includes a client device having one or more processors, one or more communication interfaces capable of being coupled to a communication network and the communication interfaces coupled to the one or more processors, one or more user interfaces coupled to the client device, an avatar client engine executed by the one or more processors, the avatar client engine: (i) receives an initial input from the one or more user interfaces; (ii) transmits the initial input using one or more processors to the one or more communication interfaces; (iii) receives instructions to generate and display on the one or more user interfaces the avatar with one or more initial avatar characteristics in response to the one or more initial characteristics.

### DRAWINGS

These and other features, aspects, and advantages of the present disclosure will become better understood when the following detailed description is read with reference to the accompanying drawings in which like characters represent like parts throughout the drawings, wherein:

FIG. 1 is a block diagram depicting a contact center in accordance with an embodiment of the present disclosure;

FIG. 2 is a block diagram depicting a manner in which a client communicates with a contact center according to aspects of the present technique;

FIG. 3 is a block diagram illustrating an example customer service device that may be arranged for transmit information regarding a call center in accordance with the present technique;

FIG. 4 is a block diagram of one embodiment of a client computer device implemented according to aspects of the present technique;

FIG. 5 is a block diagram of one embodiment of a supervisor device implemented according to aspects of the present technique;

FIG. 6 is a flow chart illustrating one method by which an avatar is created according to aspects of the present technique;

FIG. 7 is a flow chart illustrating one method by which an avatar is modified according to aspects of the present technique; and

FIG. 8 is a flow chart illustrating one method by which an avatar is modified according to aspects of the present technique.

### DETAILED DESCRIPTION

In the following detailed description, reference is made to the accompanying drawings, which form a part hereof. In the drawings, similar symbols typically identify similar components, unless context dictates otherwise. The illustrative embodiments described in the detailed description, drawings, and claims are not meant to be limiting. Other embodiments may be utilized, and other changes may be made, without departing from the spirit or scope of the subject matter presented herein. It will be readily understood that the aspects of the present disclosure, as generally described herein, and illustrated in the figures, can be arranged, substituted, combined, separated, and designed in a wide variety of different configurations, all of which are explicitly contemplated herein.

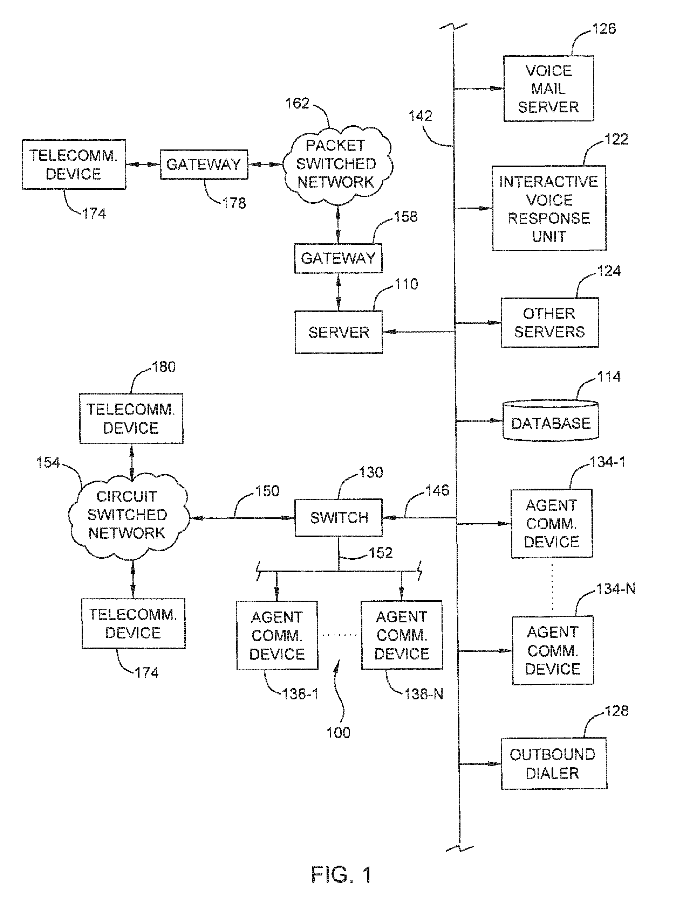

FIG. 1 depicts an illustrative embodiment of a contact center of the present disclosure where contact center agents (agents may also be called supervisor or supervising agents of the avatars) may service preferred contacts, either singularly or in multiples, simultaneously or substantially simultaneously, after a tolerable wait period or by way of an interruption from auxiliary work. A contact center 100 comprises a central server 110, a set of data stores or databases 114, which may or may not be contained within the central server 110, the databases 114 containing agent metrics, historical agent and contact data, other contact related information, and other information in general that can enhance the value and efficiency of the contact, and a plurality of servers, namely a voice mail server 126, an Interactive Voice Response (IVR) unit/system 122, and other servers 124, an outbound dialer 128, a switch 130, a plurality of working agents operating packet-switched (first) telecommunication devices 134-1 to N (such as computer work stations or personal computers or handheld communication devices including wireless communication devices), and/or circuit-switched (second) telecommunication devices 138-1 to M, all interconnected by a local area network LAN (or wide area network WAN) 142.

The servers can be connected via optional communication lines 146 to the switch 130. As will be appreciated, the other servers 124 can also include a scanner (which is normally not connected to the switch 130 or Web server), VoIP software, video call software, voice messaging software, an IP voice server, a fax server, a web server, and an email server) and the like. The switch 130 is connected, via a plurality of trunks 150, to the Public Switch Telecommunication Network (PSTN) 154 and via link(s) 152 to the second telecommunication devices 138-1 to M. A gateway 158 is positioned between the server 110 and the packet-switched network 162 to process communications passing between the server 110 and the network 162. The gateway 158 can be Avaya Inc.'s, G700 Media Gateway. TM., and may be implemented as hardware, such as via an adjunct processor (as shown) or as a chip in the server.

The term "switch" or "server" as used herein should be understood to include a PBX, an ACD, an enterprise switch, or other type of telecommunications system switch or server, as well as other types of rocessor-based communication control devices such as media servers, computers, adjuncts, and the like.

The server and/or switch can be a software-controlled system, including, but not limited to, a processing unit (CPU), microprocessor, or other type of digital data processor executing software or an Application-Specific Integrated Circuit (ASIC) as well as various portions or combinations of such elements.

The first telecommunication devices 134-1 through 134-N are packet-switched and can include, for example, IP hardphones such as the Avaya Inc.'s 4600 Series IP Phones.TM., IP softphones such as Avaya Inc.'s IP Softphone.TM., Personal Digital Assistants or PDAs, Personal Computers or PCs, laptops, packet-based H.320 video phones and conferencing units, packet-based voice messaging and response units, and packet-based traditional computer telephony adjuncts.

The second telecommunication devices 138-1 through 138-M are circuit-switched. Each of the telecommunication devices 138-1 through 138-M corresponds to one of a set of internal extensions Ext1 through ExtM, respectively. These extensions are referred to herein as "internal" in that they are extensions within the premises directly serviced by the switch. More particularly, these extensions correspond to conventional telecommunication device endpoints serviced by the switch/server, and the switch/server can direct incoming contacts or calls to, and receive outgoing contacts or calls, from these extensions in a conventional manner. The second telecommunication devices can include, for example, wired and wireless telephones, PDAs, H.320 video phones and conferencing units, voice messaging and response units, and traditional computer telephony adjuncts.

It should be noted embodiments of the present disclosure do not require any particular type of information transport medium between switch or server and first and second telecommunication devices. That is, the present disclosure may be implemented with any desired type of transport medium as well as combinations of different types of transport media. The packet-switched network 162 can be any data and/or distributed processing network, such as the Internet. The network 162 typically includes proxies (not shown), registrars (not shown), and routers (not shown) for managing packet flows.

The packet-switched network 162 is in (wireless or wired) communication with an external first telecommunication device 174 via a gateway 178, and the circuit-switched network 154 with an external (wired) second telecommunication device 180 and (wireless) third telecommunication device 184. These telecommunication devices are referred to as "external" in that they are not directly supported as telecommunication device endpoints by the switch or server. The telecommunication devices 174 and 180 are an example of devices more generally referred to herein as "external endpoints."

In one configuration, the server 110, network 162, and first telecommunication devices 134 are Session Initiation Protocol (SIP) compatible and can include interfaces for various other protocols such as the Lightweight Directory Access Protocol or LDAP, H.248, H.323, Simple Mail Transfer Protocol or SMTP, IMAP4, ISDN, E1/T1, and analog line or trunk. It should be understood the configuration of the switch, server, user telecommunication devices, and other elements as shown in FIG. 1 is for purposes of illustration only and should not be construed as limiting the present disclosure to any particular arrangement of elements.

As will be appreciated, the central server 110 is notified via LAN 142 of an incoming contact (*e.g.*, a call) by the telecommunications component (*e.g.*, switch 130, fax server, email server, web server, and/or other server) receiving the incoming contact. The incoming contact is held by the receiving telecommunications component until the server 110 forwards instructions to the component to forward or route the contact to a specific contact center resource, such as the IVR unit 122, the voice mail server 126, and/or first or second telecommunication devices 134, 138 associated with a selected preferred agent.

The server 110 distributes and connects these contacts to telecommunication devices of available preferred agents based on the predetermined criteria noted above. When the central server 110 forwards a voice contact to a selected preferred agent, the central server 110 also forwards customer-related information from databases 114 to the selected preferred agent's computer work station for viewing (such as by a pop-up display) to permit the selected preferred agent to better serve the contact. The selected preferred agent will then process the contact(s) sent to him/her by the server 110.

According to embodiments of the present disclosure, included among the programs executing on the server 110 are a preferred agent and contact selector and contact manager. The contact selector and contact manager are stored either in the main memory or in a peripheral memory (e.g., disk, CD ROM, etc.) or some other computer-readable medium of the center 100. The contact selector and contact manager collectively effect an assignment between contacts in a queue and preferred agents serving the queue (either singularly or in multiple assignments) in a way that tends to maximize contact center efficiency.

The contact selector comprises a reporting engine and assignment engine, which use predefined criteria in selecting a preferred agent to service the contact and whether one preferred agent is capable of being assigned to more than one contact at any given time.

In an embodiment of the present disclosure, the contact manager receives assignment information from the contact selector, which contact selector has determined and identified, in addition to matching a preferred agent with a contact, dependant on skills, attributes or other parameters matched, the then current agent's availability, albeit not readily but within a tolerable wait period of the selected agent for singular or multiple contacts support, and provides instructions to the contact selector to effect same.

The contact manager, based on one or more selected criteria, and agent match and availability or near availability, may determine which contacts will be assigned to the same preferred agent. One or more of the parameters can be used along or in any combination and include but are not limited to, average customer satisfaction score, average revenues, preferred language, preferred location, revenue potential, first call resolution rate, average quality score, and the like.

It is understood by embodiments of the present disclosure that a server may be connected to a computer network or system. A computer network includes the Internet, a global computer network, an internal computer network, dedicated server networks, and the like. The contact center described above may function to service various clients of an organization. An example situation, where the client communicates with the contact center through the Internet, the call is routed to a customer service device as shown below.

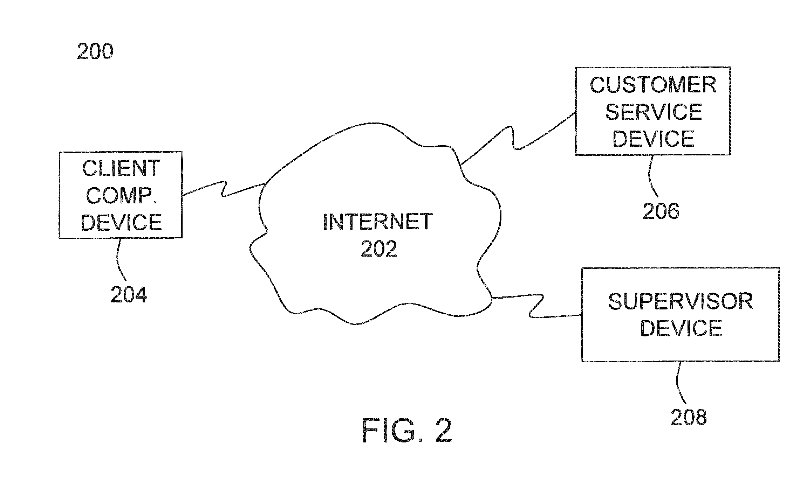

FIG. 2 is a block diagram depicting a manner in which a client communicates with a contact center according to aspects of the present technique. In the illustrated embodiment, the client communicates with the contact center via a client computer device 204. The contact center includes a customer service device 206 and the supervisor device 208. The client computer device and the contact center may communicate over Internet 202 in an embodiment where the contact center may span multiple locations.

The client computer device 204 includes an avatar client engine executed by the one or more processors. The avatar client engine is configured to receive an initial input from a client through the one or more user interfaces and transmits the initial input using one or more processors to the one or more communication interfaces (not shown). The avatar client engine is further configured to receive instructions from the customer service device 206 to generate and display on the one or more user interfaces an avatar with one or more initial avatar characteristics in response to the one or more initial characteristics. Examples of initial characteristics include physical appearance, age, emotion, speech, tone, pace of conversation, accent, style, hair, attire, accessories, and posture, history of the customer, previous avatar used during customer interaction, etc.

The customer service device 206 includes an avatar generation engine. The avatar engine may remotely configure an avatar displayed on the user interface of the client computing device 204. Further, the customer service device 206 may be coupled to a communication interface associated with the supervisor device 208. The supervisor device 208 is capable of providing communication information to the device display of the user interface of the client computer device 204, either directly or through the customer service device 206. In one embodiment, the communication information may include voice information, text, information or video information

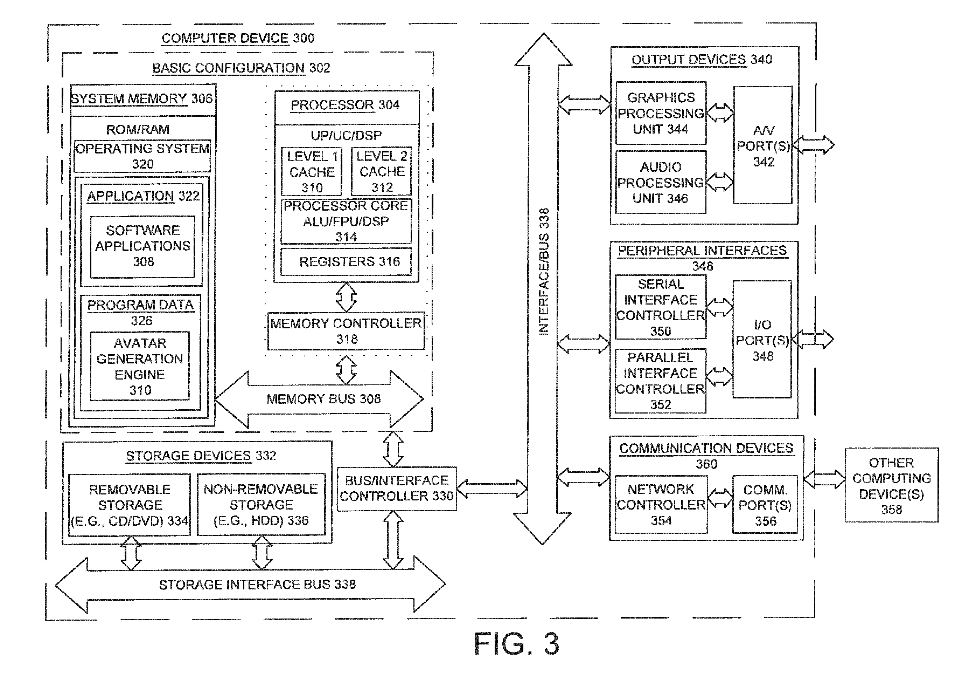

The manner in which the client computer device 204, the customer service device 206 and the supervisor device 208 are implemented is described in further detail in FIG.3, FIG.4 and FIG. 5.

FIG. 3 is a block diagram illustrating an example customer service device 300 that may be arranged to transmit information regarding a call center in accordance with the present technique. In a very basic configuration 302, computing device 300 typically includes one or more processors and a system memory 306. A memory bus 308 may be used for communicating between processor 304 and system memory 306.

Depending on the desired configuration, processor 304 may be of any type including but not limited to a microprocessor (µP), a microcontroller (µC), a digital signal processor (DSP), or any combination thereof. Processor 304 may include one more levels of caching, such as a level one cache 310 and a level two cache 312, a processor core 314, and registers 316. An example processor core 314 may include an arithmetic logic unit (ALU), a floating point unit (FPU), a digital signal processing core (DSP Core), or any combination thereof. An example memory controller 318 may also be used with processor 304, or in some implementations memory controller 58 may be an internal part of processor 304.

Customer service device 300 may have additional features or functionality, and additional interfaces to facilitate communications between basic configuration 302 and any required devices and interfaces. For example, a bus/interface controller 330 may be used to facilitate communications between basic configuration 302 and one or more data storage devices 332 via a storage interface bus 338. Data storage devices 332 may be removable storage devices 334, non-removable storage devices 338, or a combination thereof. Examples of removable storage and non-removable storage devices include magnetic disk devices such as flexible disk drives and hard-disk drives (HDD), optical disk drives such as compact disk (CD) drives or digital versatile disk (DVD) drives, solid state drives (SSD), and tape drives to name a few. Example computer storage media may include volatile and nonvolatile, removable and non-removable media implemented in any method or technology for storage of information, such as computer readable instructions, data structures, program modules, or other data.

System memory 306, removable storage devices 334 and non-removable storage devices 336 are examples of computer storage media. Computer storage media includes, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which may be used to store the desired information and which may be accessed by customer service device 300. Any such computer storage media may be part of customer service device 50.

Customer service device 300 may also include an interface bus 338 for facilitating communication from various interface devices (e.g., output devices 340, peripheral interfaces 348, and communication devices 360) to basic configuration 302 via bus/interface controller 330. Example output devices 340 include a graphics processing unit 344 and an audio processing unit 346, which may be configured to communicate to various external devices such as a display or speakers via one or more A/V ports 342. Example peripheral interfaces include a serial interface controller 350 or a parallel interface controller 352, which may be configured to communicate with external devices such as input devices (e.g., keyboard, mouse, pen, voice input device, touch input device, etc.) or other peripheral devices (e.g., printer, scanner, etc.) via one or more I/O ports 348. An example communication device 360 includes a network controller 354, which may be arranged to facilitate communications with one or more other computing devices 358 over a network communication link via one or more communication ports 356.

The network communication link may be one example of a communication media. Communication media may typically be embodied by computer readable instructions, data structures, program modules, or other data in a modulated data signal, such as a carrier wave or other transport mechanism, and may include any information delivery media. A "modulated data signal" may be a signal that has one or more of its characteristics set or changed in such a manner as to encode information in the signal. By way of example, and not limitation, communication media may include wired media such as a wired network or direct-wired connection, and wireless media such as acoustic, radio frequency (RF), microwave, infrared (IR) and other wireless media. The term computer readable media as used herein may include both storage media and communication media.

Customer service device 300 may be implemented as a portion of a small-form factor portable (or mobile) electronic device such as a cell phone, a personal data assistant (PDA), a personal media player device, a wireless web-watch device, a personal headset device, an application specific device, or a hybrid device that include any of the above functions. Customer service device 300 may also be implemented as a personal computer including both laptop computer and non-laptop computer configurations.

Depending on the desired configuration, system memory 56 may be of any type including but not limited to volatile memory (such as RAM), non-volatile memory (such as ROM, flash memory, etc.) or any combination thereof.

System memory 306 may include an operating system 320, one or more applications 322, and program data 326. Application 322 includes an avatar generation engine 308 executed by processor 304. The avatar engine 308 is configured to receive an initial input from the one or more communication interfaces and processes the initial input using one or more processors. The avatar generation engine 308 is further configured to determine one or more initial characteristics based on processing the initial input and provides instructions to generate, remotely configure, and/or display the avatar on a user interface of remote client computer device with one or more initial avatar characteristics in response to the one or more initial characteristics. The initial characteristics 310 are stored in program data 326.

Further, the avatar generation engine 308 is also configured to receive a dynamic input from the one or more communication interfaces during a customer service dialogue/interaction (e.g. through avatar chat, avatar dialogue, etc.) between the customer and client computer device; process the dynamic input dynamically using the one or more processors, determine one or more dynamic characteristics based on processing the dynamic input and provide instructions to modify and display with one or more dynamic avatar characteristics on a user interface of remote client computer device in response to the one or more dynamic characteristics. The manner in which a client computer device operates is described in further detail below.

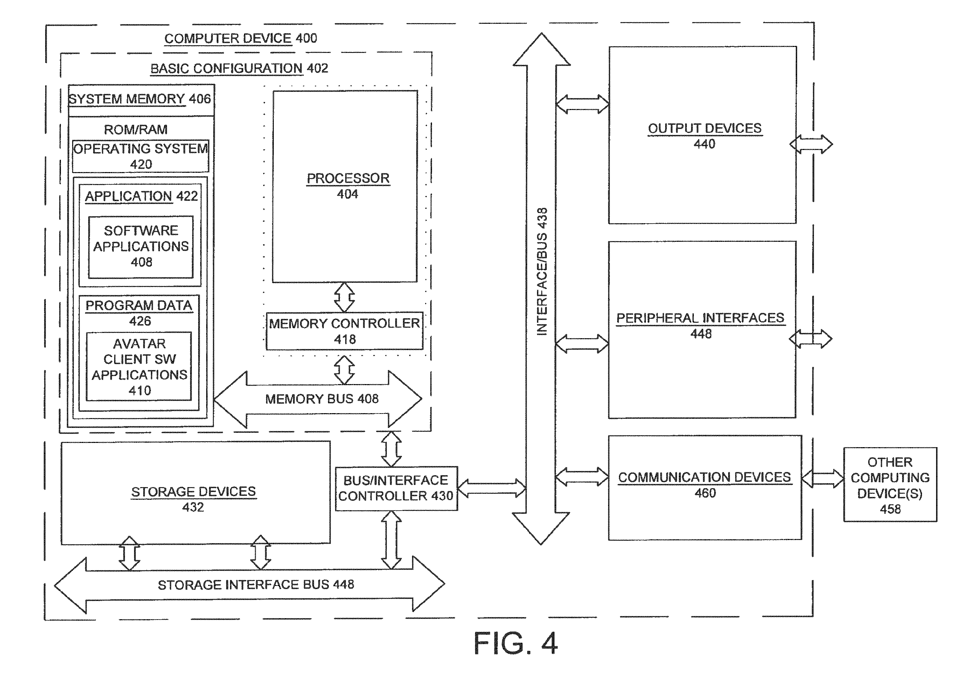

FIG. 4 is a block diagram of one embodiment of a client computer device implemented according to aspects of the present technique. For conciseness, only the software application is described in detail below since the remaining components may be implemented similar to the components of the customer service device 300 described in detail in FIG.3.

System memory 406 may include an operating system 420, one or more applications 422, and program data 426. Application 422 includes an avatar client engine 408 executed by processor 54. The avatar client engine 408 is configured to receive an initial input from the one or more user interfaces from a customer, for example, and transmit the initial input using one or more processors to the one or more communication interfaces associated with a customer service device. Further, the avatar client engine 408 is configured to receive instructions from the customer service device to generate, configure and/or display on the one or more user interfaces the avatar with one or more initial avatar characteristics in response to the one or more initial characteristics.

In addition, the avatar client engine 408 is further configured to receive a dynamic input from the one or more user interfaces during a customer service dialogue with the customer, transmit the dynamic input dynamically using the one or more processors to the one or more communication interfaces. Further, the avatar client engine 408 may transmit such dynamic input to the customer service device. Also, the avatar client engine 408 is also configured to receive instructions from the customer service device to modify and display with one or more dynamic avatar characteristics in response to the set of one or more dynamic characteristics. In one embodiment, the avatar client engine 408 receives instructions to modify and display the avatar with one or more agent-based avatar characteristics in response to the one or more agent-based characteristics. Such instructions may be received from the customer service device or a supervisor device. In one embodiment, the initial characteristics and dynamic characteristics 410 are stored in program data 426. In certain situations, the avatars ay be modified based on a supervisor. The manner in which the avatar is modified is described in further detail below

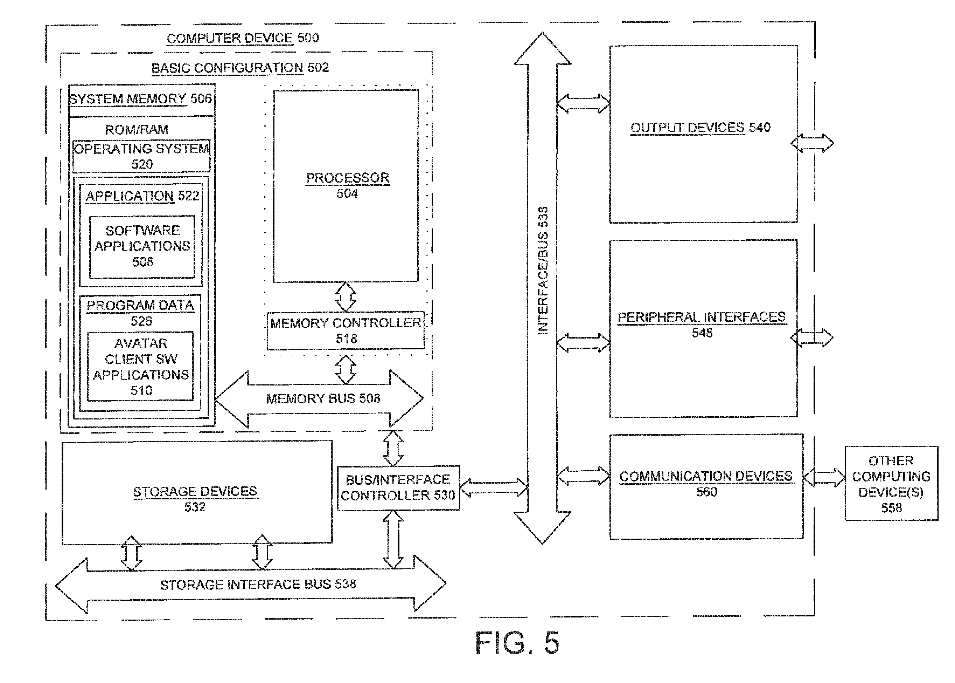

FIG. 5 is a block diagram of one embodiment of a supervisor device implemented according to aspects of the present technique. For conciseness, only the software application is described in detail below since the remaining components may be implemented similar to the components of the customer service device 300 described in detail in FIG.3.

Supervisor device comprises system memory 506 which may include an operating system 520, one or more applications 522, and program data 526. Application 522 includes an avatar control software application 508. The avatar control software application 508 is configured to receive supervisor input from the one or more communication interfaces, process the supervisor input dynamically using the one or more processors, determining one or more supervisor-based characteristics based on processing the supervisor input and providing instructions to modify and display the avatar with one or more supervisor-based avatar characteristics in response to the one or more supervisor-based characteristics. Such instructions may be transmitted directly to a client computer device or relayed to the client computer device through a customer service device. In one embodiment, the supervisor based characteristics 510 is stored in program data 526.

Moreover, the avatar control software application 508 is configured to determine if the dynamic input includes escalation input wherein the escalation input is selected from the group consisting of a change in tone or abusive language. When such an input is detected, the avatar generation engine of a customer service device (See Figure 3) may forward such escalation input to the user interface associated with a supervisor device. In response to the escalation input, the supervisor device is capable of providing communication information to the device display of the client computer device, either directly or through the customer service device. The communication information can be voice information, text information or video information. Such communication information may include instructions to make the avatar provide responses (verbal or visual) displayed on the client computing device to the customer to de-escalate the customer's agitated state. For example, the avatar may respond that a human supervisor may intervene shortly. In another example, the avatar may offer a discount or credit toward a product or service rendered to the customer. In still another example, the avatar may provide a response that the customer may have additional time to pay a bill invoiced to the client.

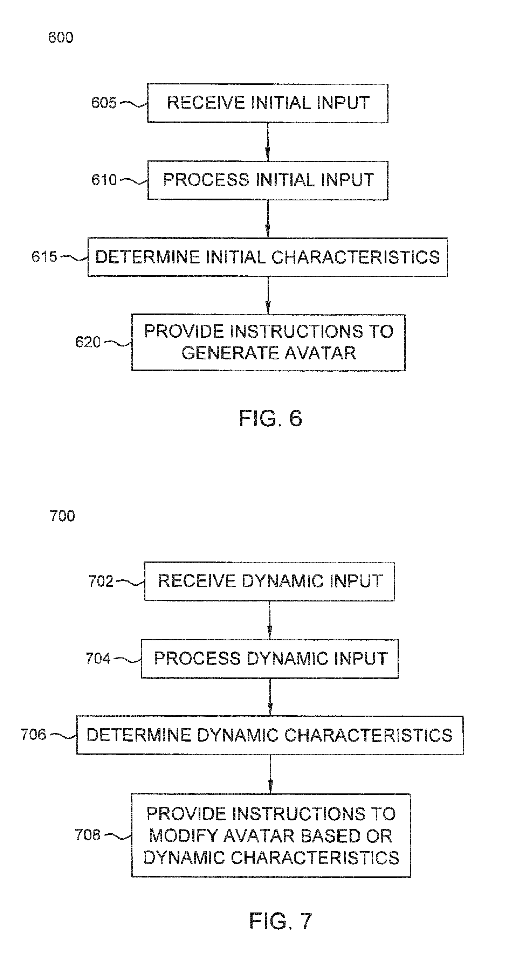

FIG. 6 is a flow chart illustrating one method by which an avatar is generated according to aspects of the present technique. The process 600 may begin with receiving an initial input at step 605 at a customer service device from a client computing device (See Figures 2-4). At step 610, the initial input is processed by one or more processors in the customer service device. The initial input may be in the form of text input, image input, video input, audio input or a combination thereof. For example, a customer may be interacting with a customer service department. The client computer device used by the customer may use a video camera and microphone to capture an image and voice of the customer. Further, the client avatar engine may discern characteristics of the customer using image and speech recognition techniques on the captured customer image and customer voice such as regional accent, tone, attire, demeanor, etc.

At step 615, initial characteristics of the avatar are determined based on or in response to the initial input using an avatar generation software engine residing on and implemented by the customer service device. The initial characteristics of the avatar may be customer physical appearance, age, emotion, speech, tone, pace of conversation, accent, style, hair, attire, accessories, and posture. For example, if it is discerned that a customer is agitated from the initial input, the initial characteristics may include a calm voice for the avatar to ease the customer's agitation. At stop 620, instructions are provided to the client computing device and the client avatar software engine residing thereon may generate an avatar based on the determined characteristics. The process 600 described above illustrates a method by which an avatar is generated. The manner in which the avatar can be modified based on client inputs is described in further detail below.

FIG. 7 is a flow chart illustrating one method by which an avatar is modified according to aspects of the present technique. The process 700 begins with receiving a dynamic input at step 705 from a client computing device (See Figure 5) at a customer service device (See Figure 3). This dynamic input is received by the client computing device by monitoring the avatar interaction with the customer. For example, the customer may provide text information through an instant messaging program. Such text information may be considered dynamic input. In another example, the client computing device may receive video input through the client computing device video (web) camera. Such video may show the customer in an agitated state and may be considered dynamic input.

At step 710, the dynamic input is processed by an avatar generation engine residing on and implemented by the supervisor device. The dynamic input may be in the form of text input, image input, video input, audio input or a combination thereof. For example, the avatar engine may discern from text information that the customer is using profane language and thus the avatar-customer interaction is in an escalated state. A further example, may be that the audio associated with a video dynamic input contains profanity and thus the avatar-customer interaction is determined to be in an escalated state

At step 715, dynamic characteristics are determined by the avatar generation engine based on or in response to the dynamic input. The characteristics may be customer physical appearance, age, emotion, speech, tone, pace of conversation, accent, style, hair, attire, accessories, and posture. At step 720, instructions are provided to a client computing device and the client avatar engine thereon to modify the avatar generated by process 600 based on the dynamic characteristics. For example, if it is discerned that the customer is agitated, then the dynamic characteristics may include providing the avatar with a calm tone of voice to ease the customer's agitation. The process 700 described above illustrates a method by which an avatar is modified. However, under certain circumstance, the avatars may need to be modified with the help of a supervisor input as well. The manner in which the avatar can be modified based on a supervisor's inputs is described in further detail below.

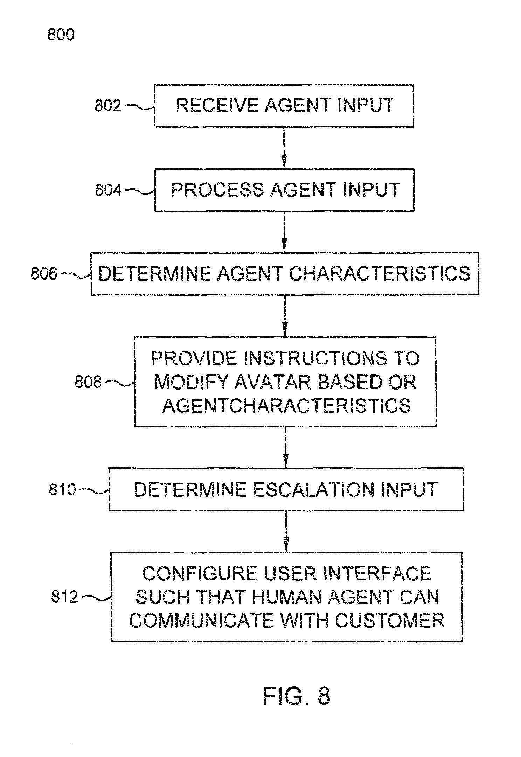

FIG. 8 is a flow chart is one method by which an avatar is modified according to aspects of the present technique. The process 800 begins with receiving a supervisor input at step 802 from the supervisor device (See Figure 2 and 4). At step 804, the supervisor input is processed by an avatar generation engine on a customer service device as described in Figure 3.

At step 806, supervisor characteristics are determined based on the processing of the supervisor input. The characteristics may be customer physical appearance, age, emotion, speech, tone, pace of conversation, accent, style, hair, attire, accessories, and posture. At step 808, instructions are provided to modify the avatar generated by processes 600 and/or 700 based on or in response to the supervisor characteristics.

At step 810, escalation input is determined. For example, the escalation input may be a change in tone or abusive language. At step 812, the user interface of the client device is configured such that the human supervisor can intervene and communicate with the customer.

As will be appreciated by those of ordinary skill in the art, the foregoing example, demonstrations, and process steps may be implemented by suitable code on a processor-based system. It should also be noted that different implementations of the present technique may perform some or all of the steps described herein in different orders or substantially concurrently, that is, in parallel.

Furthermore, the functions may be implemented in a variety of programming languages, such as C++ or JAVA. Such code, as will be appreciated by those of ordinary skill in the art, may be stored or adapted for storage on one or more tangible, machine readable media, such as on memory chips, local or remote hard disks, optical disks (that is, CD's or DVD's), or other media, which may be accessed by a processor-based system to execute the stored code.

The above described techniques provide several advantages including providing personalized communication with customers which results customer loyalty and better business opportunities.

While only certain features of the disclosure have been illustrated and described herein, many modifications and changes will occur to those skilled in the art. It is, therefore, to be understood that the appended claims are intended to cover all such modifications and changes as fall within the true spirit of the disclosure.

## Claims

1. A method for managing an avatar, the method comprising:
receiving an initial input from one or more communication interfaces;
processing the initial input using one or more processors;
determining one or more initial characteristics based on processing the initial input;
providing instructions to generate and display the avatar with one or more initial avatar characteristics in response to the one or more initial characteristics.

2. The method of claim 1, further comprising:
receiving dynamic input from the one or more communication interfaces during a customer service dialogue with the customer;
processing the dynamic input dynamically using the one or more processors;
determining one or more dynamic characteristics based on processing the dynamic input;
providing instructions to modify and display with one or more dynamic avatar characteristics in response to the one or more dynamic characteristics.

3. The method of claim 2, further comprising:
displaying the dynamic input on a device display of a user interface of a supervisor device;
receiving supervisor input from the one or more communication interfaces;
processing the supervisor input dynamically using the one or more processors;
determining one or more supervisor-based characteristics based on processing the supervisor input;
providing instructions to modify and display the avatar with one or more supervisor based avatar characteristics in response to the dynamic input.

4. The method af claim 3, further comprising remotely configuring the user interface of a client computer device coupled to a supervisor device wherein the supervisor device provides communication information related to initial input to the device display of the user interface of the client computer device wherein the communication information is selected from the group consisting of voice information, text information or video information.

5. The method of claim 3, further comprising
determining that the dynamic input includes escalation input wherein the escalation input is selected from the group consisting of a change in tone, abusive language, emotion detectiong, or recognizing keywords.
providing responsive communication information to the user interface associated with the client computing device wherein the responsive communication information is in response to to the escalation input and the responsive communication information is provided by the supervisor computing device.

6. The method of claim 3:
wherein the initial input, the dynamic input, is from the group consisting of text input, image input, video input, audio input and a combination thereof;
wherein the initial, dynamic, and supervisor-based avatar characteristics is selected from the group consisting of avatar physical appearance, age, emotion, speech, tone, pace of conversation, accent, style, hair, attire, accessories, and posture.

7. A device managing an avatar, the device comprising:
one or more processors;
one or more communication interfaces capable of being coupled to a communication network and the coupled to the one or more processors; an avatar generation engine executed by the one or more processors, the avatar engine: (i) receives an initial input from the one or more communication interfaces; (ii) processes the initial input using one or more processors; (iii) determines one or more initial characteristics based on processing the initial input; and (iv) provides instructions to generate and display the avatar with one or more initial avatar characteristics in response to the one or more initial characteristics.

8. The device of claim 7, wherein the avatar generation engine: (i) receives a dynamic input from the one or more communication interfaces during a customer service dialogue with the customer; (ii) processes the dynamic input dynamically using the one or more processors; (iii) determines one or more dynamic characteristics based on processing the dynamic input; (iv) provides instructions to modify and display with one or more dynamic avatar characteristics in response to the one or more dynamic characteristics.

9. The device of claim 7, wherein the avatar generation engine remotely configures the user interface to coupled to a client computing device wherein the supervisor device is capable of providing communication information to the device display of the user interface of the client computer device using the avatar generation engine wherein the communication information is selected from the group consisting of voice information, text, information or video information

10. The device of claim 7, wherein the avatar engine: (i) determines that the dynamic input includes escalation input wherein the escalation input is selected from the group consisting of a change in tone or abusive language; (ii) provides responsive communication information to the user interface associated with the client computing device wherein the responsive communication information is in response to the escalation input and the responsive communication information is provided by the supervisor computing device.

11. The device of claim 8, wherein the avatar generation engine: displays the dynamic input on a device display capable of being viewed by a supervisor; (ii) receives supervisor input from the one or more communication interfaces; (iii) processes the supervisor input dynamically using the one or more processors; (iv) determines one or more supervisor-based characteristics based on processing the supervisor input; (v) providing instructions to modify and display the avatar with one or more supervisor-based avatar characteristics in response to the one or more supervisor-based characteristics.

12. The device of claim 9:
wherein the initial input, the dynamic input, and the supervisor input is selected from the group consisting of text input, image input, video input, audio input and a combination thereof;
wherein the initial, dynamic, and supervisor-based avatar characteristics is selected from the group consisting of avatar physical appearance, age, emotion, speech, tone, pace of conversation, accent, style, hair, attire, accessories, and posture.

13. A system managing an avatar, the system comprising:
a customer service device having:
one or more processors;
one or more communication interfaces capable of being coupled to a communication network and the coupled to the one or more processors;
an avatar generation engine executed by the one or more processors, the avatar generation engine: (i) receives an initial input from the one or more communication interfaces; (ii) processes the initial input using one or more processors; (iii) determines one or more initial characteristics based on processing the initial input; and (iv) provides instructions to generate and display the avatar with one or more initial avatar characteristics in response to the one or more initial characteristics;
a client device having:
one or more processors;
one or more communication interfaces capable of being coupled to a communication network and the coupled to the one or more processors;
one or more user interfaces coupled to the client device;
an avatar client engine executed by the one or more processors, the avatar client engine: (i) receives an initial input from the one or more user interfaces; (ii) transmits the initial input using one or more processors to the one or more communication interfaces; (iii) receives instructions to generate and display on the one or more user interfaces the avatar with one or more initial avatar characteristics in response to the one or more initial characteristics.

14. The system of claim 13, wherein the avatar generation engine: (i) receives a dynamic input from the one or more communication interfaces during a customer service dialogue with the customer; (ii) processes the dynamic input dynamically using the one or more processors; (iii) determines one or more dynamic characteristics based on processing the dynamic input; (iv) provides instructions to modify and display with a one or more dynamic avatar characteristics in response to the one or more dynamic characteristics.

15. The system of claim 14, wherein the avatar client engine: (i) receives a dynamic input from the one or more user interfaces during a customer service dialogue with the customer; (ii) transmit the dynamic input dynamically using the one or more processors to the one or more communication interfaces; (iii) receives instructions to modify and display with one or more dynamic avatar characteristics in response to the second set of one or more dynamic characteristics.
